# EUROPEAN PATENT APPLICATION

(11) **EP 4 395 362 A1**
(43) Date of publication of application: **03.07.2024**
(21) Application number: 23160338.2
(22) Date of filing: 07.03.2023
(51) Int. Cl.: H04Q 1/06

(54) **CABLE ARRANGING MECHANISM, CONNECTING PLATE FOR DISTRIBUTION AND DISTRIBUTION FRAME**

(30) Priority: 30.12.2022 CN 202211729428
(71) Applicant: Capatronics Electronics (kunshan) Co., Ltd., Kunshan, Jiangsu 215000 (CN)
(72) Inventor: Wang, Chuanbao, Kunshan, Jiangsu, 215000 (CN); Wang, Zhiwei, Kunshan, Jiangsu, 215000 (CN)
(74) Representative: Kurig, Thomas

(57) **Abstract**

The present application discloses a cable arranging mechanism, a connecting plate for distribution and a distribution frame. The cable arranging mechanism provided by the present application includes a first plate body and a second plate body which are capable of being clamped with each other. The first plate body is provided with an opening for a connector of a cable to pass through. When the second plate body and the first plate body are separated from each other, the cable and the connector thereof are capable of passing through the opening. When the second plate body and the first plate body are clamped with each other, at least one through hole for the cable to pass through is formed. The overall space occupied by the cable arranging mechanism provided by the present application is very small. When the cable arranging mechanism provided by the present application is provided on other mechanisms, no cable arranging frame is required, the space originally occupied by the distribution frame will not be increased, and the arranged cables are orderly and easy to locate and search.

## Description

### Technical Field

The present application relates to the field of network cabling equipment, in particular to a cable arranging mechanism, a connecting plate for distribution and a distribution frame.

### Background

Network is indispensable in people's production and life today. In order to facilitate the unified management of network communication equipment and the connection with optical cables, cabinets are needed in most cases to respectively connect a plurality of optical cables to a switch. In this process, one end of the switched cable (or jumper) needs to be connected to the switch and the other end needs to be connected to a network interface of a distribution mechanism.

Due to the large number of network cables in the cabinet, a distribution frame usually has 12 holes, 24 holes and other specifications. Therefore, 12 or 24 jumpers often need to be connected on the distribution frame. Therefore, in order to facilitate the management of cables, cable arranging frames need to be separately provided in most cases, so that they can be used together with the distribution frame, thus facilitating the arrangement of cables.

However, the existing cable arranging frame often occupies a large volume. Generally speaking, the height of the cable arranging frame is required to be 1U, and it also needs to occupy a large space in width and length directions. At present, although there is a cable arranging frame as disclosed in the Chinese utility model patent with authorized publication No. 209497556U, the cable arranging effect is not ideal, and each jumper cannot be separated clearly. During troubleshooting, it takes a lot of time to locate the cable. Moreover, the cable arranging frame will inevitably increase the space occupied by the cable arranging mechanism. In addition, the position of the cable cannot be completely fixed, so each cable is easy to jump.

### Summary

In order to overcome the disadvantages, the purpose of the present application is to provide a cable arranging mechanism, which does not increase the space and volume originally occupied by the distribution mechanism, can clearly arrange and separate each cable and can rapidly locate the cable.

A first purpose of the present application is to provide a cable arranging mechanism, which includes: a first plate body, the first plate body being provided with an opening for a connector of a cable to pass through; and a second plate body, at least partial area of the second plate body being capable of being clamped with the first plate body, when the second plate body and the first plate body are clamped with each other, the opening for the connector of the cable to pass through being closed and at least one through hole for the cable to pass through being formed, and when the second plate body and the first plate body are not clamped, the opening for the connector of the cable to pass through being in an open state. In the cable arranging mechanism provided by the present application, by providing the second plate body which can be separated and clamped with the first plate body, separating the second plate body from the first plate body when it is necessary to pass the cable through the cable arranging mechanism, and then clamping the second plate body with the first plate body after the cable passes through, the cabling operation can be quickly realized. The overall space occupied by the cable arranging mechanism provided by the present application is very small and the space originally occupied by the distribution frame is not increased. The cable arranging mechanism provided by the present application can have a through hole corresponding to each cable, so that the fault cable can be quickly located and eliminated.

Further, the cable arranging mechanism further includes a clamping piece and the clamping piece is capable of moving towards a direction close to or far away from the cable passing through the through hole. Therefore, the position of the arranged cable can be fixed by pushing the clamping piece towards the direction close to the cable, and the cable will not jump in subsequent operations.

Further, at least one of the first plate body and the second plate body is provided with an adjustment chamber for mounting the clamping piece, and the clamping piece is capable of moving in the adjustment chamber.

Further, the cable arranging mechanism further includes at least one first clamping protrusion capable of being clamped with the clamping piece, and the clamping piece is provided with at least one first clamping groove capable of being fit with the first clamping protrusion. Therefore, the relative positions of the clamping piece and the first clamping protrusion can be adjusted according to the diameters of different cables to ensure the fixation of cables with different specifications.

Further, the adjustment chamber is provided in the first plate body and the first clamping protrusion is provided on the second plate body.

Further, the cable arranging mechanism further includes at least one limiting protrusion, a limiting groove I is provided in the end of the clamping piece close to the through hole, a limiting groove II is provided in the end of the clamping piece far away from the through hole, and the limiting protrusion is capable of being respectively clamped into the limiting groove I and the limiting groove II. Therefore, the position of the clamping piece can be limited under the action of the limiting protrusion, so that when the cable needs to pass through the through hole, the clamping piece will not prevent the cable from passing through the through hole; when it is used for clamping the cable with smaller diameter, it can ensure that the clamping piece will not fall off from the adjustment chamber.

Further, the limiting protrusion is provided on an inner sidewall of the adjustment chamber.

Further, at least one first clamping head capable of being clamped with the first plate body is provided on the second plate body and the first clamping head is provided with a second clamping groove capable of being clamped with the first plate body. Therefore, under the fitting between the first clamping head and the second clamping groove, it is convenient to clamp the second plate body and the first plate body.

Further, the side of the first clamping head far away from the second plate body is provided with an adjustment groove and the first clamping head is capable of moving towards a direction close to or far away from the first plate body in the adjustment groove.

Further, the cable arranging mechanism further includes a labeling area, the labeling area is used for marking a hole number of the through hole, and the labeling area is provided on the second plate body and is located in a central area of the second plate body. Since the labeling area is provided on the second plate body, it is convenient to identify the hole number, the structural space of the second plate body is fully utilized, and the overall structure of the cable arranging mechanism is compact.

Further, the first plate body is further provided with a clamping part for connecting with a third mechanism.

Further, the clamping part includes: at least one second clamping protrusion, the second clamping protrusion being provided close to a first edge of the first plate body, the third mechanism being provided with a third clamping groove fit with the second clamping protrusion; and at least one clamping fastener, the clamping fastener being used for clamping with a partial area of the third mechanism. Therefore, when it is necessary to connect the cable arranging mechanism with the third mechanism, the second clamping protrusion is clamped with the third clamping groove, and the clamping fastener is clamped with the third mechanism, thus realizing the rapid connection between the cable arranging mechanism and the third mechanism.

A second purpose of the present application is to provide a connecting plate for distribution, wherein the connecting plate for distribution includes a main plate body and the cable arranging mechanism, the main plate body is provided with at least one network interface for plugging a network cable, and the height of the connecting plate is 1U-2U.

Further, the height of the connecting plate is 1U and the height occupied by the cable arranging mechanism does not exceed 0.5U. Therefore, by using the connecting plate provided by the present application, the occupied space is not increased due to the provision of the cable arranging mechanism. Since the height of the cable arranging mechanism does not exceed 0.5U, the occupied space is not increased in the height direction, and the arranged cable will not increase the occupied space of the distribution frame in the length and width directions.

A third purpose of the present application is to provide a distribution frame, wherein the distribution frame includes the connecting plate for distribution, a frame body connected with the connecting plate and a cover body detachably connected with the frame body, and when the cover body is closed, the cable arranging mechanism is not provided in a chamber formed by the cover body and the frame body. Therefore, the arranged cable is located outside the chamber. Under the isolation of the cover body, it is ensured that the cable will not be entangled with the cable body in the distribution frame, the external appearance of the distribution frame is attractive, and the competitiveness of the product is improved.

### Description of the Drawings

FIG. 1 illustrates a 3D structural schematic diagram when a second plate body and a first plate body are clamped according to embodiment 1 of the present application.
FIG. 2 illustrates a 3D structural schematic diagram of a first plate body according to embodiment 1 of the present application.
FIG. 3 illustrates a 3D structural schematic diagram of a second plate body according to embodiment 1 of the present application.
FIG. 4 illustrates a 3D structural schematic diagram of a clamping piece according to embodiment 1 of the present application.
FIG. 5 illustrates a structural schematic diagram of a limiting protrusion according to embodiment 1 of the present application.
FIG. 6 illustrates a schematic diagram of a fourth clamping groove according to embodiment 1 of the present application.
FIG. 7(a) illustrates a 3D structural schematic diagram of a connecting plate for distribution according to embodiment 2 of the present application.
FIG. 7(b) illustrates a schematic diagram of a use scene of a connecting plate for distribution according to embodiment 2 of the present application.
FIG. 7(c) illustrates a schematic diagram of another use scene of a connecting plate for distribution according to embodiment 2 of the present application.
FIG. 8 illustrates a 3D structural schematic diagram according to embodiment 3 of the present application.
FIG. 9 illustrates a 3D structural schematic diagram when a cover body is not provided according to embodiment 3 of the present application.
FIG. 10 illustrates a 3D structural schematic diagram when a network interface module of a PCB is assembled in a box body according to embodiment 3 of the present application.

In the drawings,
11-first plate body; 111-opening; 112-arc-shaped groove I; 12-second plate body; 121-arc-shaped groove II; 122-first clamping protrusion; 1221-slope surface II; 123-adjustment tank; 124-labeling area; 13-through hole; 14-first clamping head; 2-clamping piece; 21-adjsutment chamber; 211-limiting protrusion; 22-first clamping groove; 23-first clamping tongue; 231-slope surface I; 25-limiting groove I; 26-limiting groove II; 141-second clamping groove; 142-dialing piece; 143-retaining piece; 31-second clamping protrusion; 32-clamping fastener; 4-third clamping groove; 5-main plate body; 51-network interface; 52-extension plate I; 521-clamping position; 53-extension plate II; 54-bracket; 6-frame body; 61-cable arranging frame; 62-cable clamping base; 63-tying fastener; 7-cover body; 81-network module; 82-PCB; 821-connector; 9-fourth clamping groove.

### Description of the Embodiments

The preferred embodiments of the present application will be described in detail below with reference to the drawings, so that the advantages and features of the present application can be more easily understood by those skilled in the art, and the scope of protection of the present application can be more clearly defined.

Term explanation: "1U" herein refers to the international standard height of distribution frame and cable arranging frame products, which is generally 44mm.

### Embodiment 1

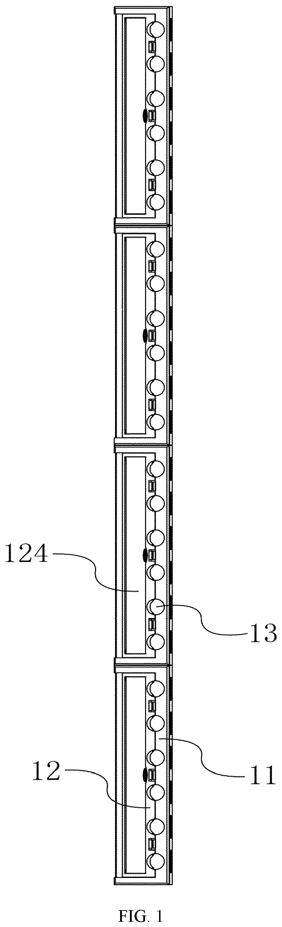

Referring to FIG. 1, this embodiment provides a cable arranging mechanism, which includes a first plate body 11 and a second plate body 12 capable of being clamped with each other.

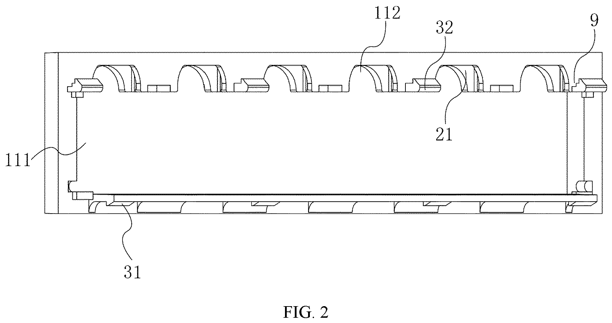

Referring to FIG. 2, the first plate body 11 is provided with an opening 111 for a connector of a cable to pass through. Therefore, when the second plate body 12 is separated from the first plate body 11, the cable and the connector thereof can be conveniently passed through the opening 111 to facilitate cable arrangement.

When the second plate body 12 and the first plate body 11 are clamped with each other, at least one through hole 13 for the cable to pass through is formed.

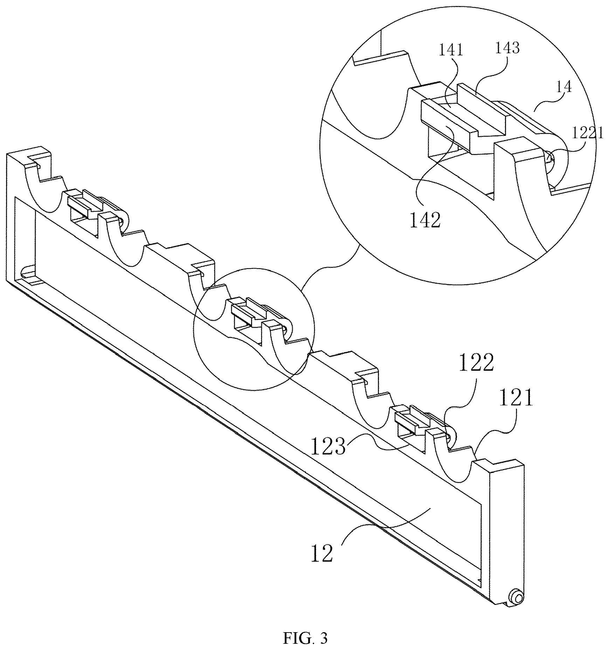

Referring to FIG. 3, in some embodiments, the side of the second plate body 12 close to the first plate body 11 is provided with an arc-shaped groove 121, and the side of the first plate body 11 close to the second plate body 12 is provided with an arc-shaped groove 112. Therefore, when the second plate body 12 and the first plate body 11 are clamped, the arc-shaped groove 112 and the arc-shaped groove 121 just form a through hole 13, so that the body part of the cable can be limited in the through hole 13. In some embodiments, the inner diameter of the through hole 13 is larger than the outer diameter of the connector of the cable. Therefore, when the second plate body 12 and the first plate body 11 are clamped with each other, the connector of the cable will not fall off or fall back from the through hole 13.

In the cable arranging mechanism provided by the present application, by arranging the second plate body 12 which can be separated from and clamped with the first plate body 11, when cabling is needed, the second plate body 12 is separated from the first plate body 11, and the second plate body 12 is clamped with the first plate body 11 after the cable body passes through, so that the cabling operation can be quickly realized. The overall space occupied by the cable arranging mechanism provided by the present application is very small, so that when the cable arranging mechanism provided by the present application is provided on other mechanisms (such as distribution frame), the space originally occupied by the distribution frame will not be increased, thus effectively reducing the volume occupied by the cable arranging mechanism.

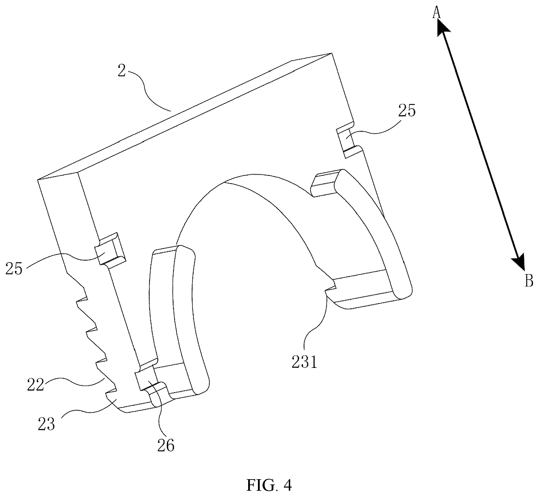

Referring to FIG. 4, the cable arranging mechanism provided by the present application further includes a clamping piece 2 and an adjustment chamber 21 for accommodating the clamping piece 2. The clamping piece 2 can move towards a direction close to or far away from the cable passing through the through hole 13 and is used for fixing the cable.

In some embodiments, the adjustment chamber 21 is provided on the first plate body 11, and the adjustment chamber 21 is located above the cable body to be fixed. Correspondingly, an upper opening 111 of the adjustment chamber 21 is provided on an upper surface of the first plate body 11. Therefore, after the cable is placed into the through hole 13 and the cable arrangement is completed, the position of the cable can be fixed by pushing the clamping piece 2 towards the direction of the cable at the upper opening 111.

The cable arranging mechanism provided by the present application further includes at least one first clamping protrusion 122 provided on the second plate body 12. Correspondingly, at least one first clamping groove 22 capable of being fit with the first clamping protrusion 122 is provided in the clamping piece 2.

The clamping piece 2 is further provided with a plurality of first clamping tongues 23 which are provided in sequence. A first clamping groove 22 is formed between adjacent clamping tongues. One side surface of the first clamping tongue 23 is provided with a slope surface 1231. The first clamping protrusion 122 is correspondingly provided with a slope surface II 1221 capable of being fit with the slope direction of the slope surface I 231. Therefore, when it is necessary to clamp the clamping piece 2 with the first clamping protrusion 122, the clamping piece 2 is pushed to move. Under the action of the slope surface 1231 and slope surface II 1221, it is convenient to move the clamping piece 2 until the first clamping protrusion 122 is clamped into a first clamping groove 22.

In some embodiments, the second plate body 12 is pivotally connected with the first plate body. Therefore, when the second plate body 12 is turned over to a position where it is not clamped with the first plate body 11, the first clamping protrusion 122 and the first clamping groove 22 are separated from each other, thus facilitating the movement of the clamping piece 2 and the removal of the cable. When the second plate body 12 is turned over to a position where it is clamped with the first plate body 11, the first clamping protrusion 122 can be clamped into the first clamping groove 22 when the clamping piece 2 is pushed, so that the clamping position of the clamping piece 2 can be adjusted according to the diameters of different cables, thus realizing the adjustment of the position of the clamping piece 2.

In other possible embodiments, the adjustment chamber 21 may also be provided in the second plate body 12, that is, the clamping piece 2 is located below the cable, and a corresponding adjustment chamber 21 that facilitates the pushing of the clamping piece 2 is provided in the second plate body 12. Correspondingly, the first clamping protrusion 122 is provided on the first plate body 11.

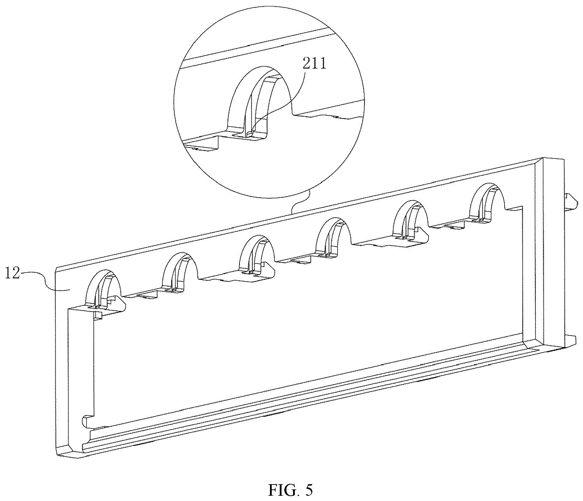

Referring to FIG. 5, the cable arranging mechanism provided by the present application further includes at least one limiting protrusion 11. Referring to FIG. 4, a limiting groove II 26 is provided in the side surface of the end of the clamping piece 2 close to the second plate body 12, a limiting groove 125 is provided in the side surface of the end of the clamping piece 2 far away from the second plate body 12, and the limiting protrusion 211 is capable of being respectively clamped into the limiting groove I 25 and the limiting groove II 26.

In some embodiments, the limiting protrusion 211 is arranged on an inner sidewall of the adjustment chamber 21. Here, description will be made by taking that the adjustment chamber 21 is provided in the first plate body 11 as an example. When it is necessary to pass the cable through the through hole 13, the limiting groove II 26 in the bottom of the clamping piece 2 is clamped with the limiting protrusion 211. At this time, the clamping piece 2 should be located at the top (here, the direction of arrow A in FIG. 4 is "up", and the direction of arrow B is "down"), so that the cable will not be prevented from passing through the through hole 13. When the cable with smaller diameter is clamped, the limiting groove I 25 in the top of the clamping piece 2 is clamped with the limiting protrusion 211, thus ensuring that the clamping piece 2 will not fall off from the adjustment chamber 21.

In other possible embodiments, the limiting protrusion 211 may also be provided outside the adjustment chamber 21, or at the second plate body 12 body or other positions where the position of the clamping piece 2 can be conveniently defined.

In the cable arranging mechanism provided by the present application, the second plate body 12 is provided with at least one first clamping head 14 capable of being clamped with the first plate body 11. The first clamping head 14 is provided with a second clamping groove 141 capable of being clamped with the first plate body 11.

The first clamping head 14 in the present application is a movable clamping head. The first clamping head 14 includes a dialing piece 142 and a retaining piece 143. The dialing piece 142 and the retaining piece 143 form the second clamping groove 141. When the second plate body 12 and the first plate body 11 are clamped with each other, the dialing piece 142 and the retaining piece 143 are respectively located on two sides of the first plate body 11. An adjustment groove 123 is provided in the side of the first clamping connector 14 of the second plate body 12 far away from the first plate body 11. The first clamping head 14 can move towards a direction close to or far away from the first plate body 11 in the adjustment groove 123. Therefore, when the second plate body 12 needs to be clamped with the first plate body 11, the first plate body 11 is clamped in the second clamping groove 141. When the second plate body 12 needs to be separated from the first plate body 11, since the adjustment groove 123 provides an adjustment space for the movement of the dialing piece 142, pressing the dialing piece 142 at this time can separate the second plate body 12 from the first plate body 11, thus making the opening 111 in an open state and smoothly passing the cable through the opening 111.

Referring to FIG. 1, the cable arranging mechanism provided by the present application further includes a labeling area 124. The labeling area 124 is used for marking a hole number of the through hole 13.

In some embodiments, the labeling area 124 is provided on the second plate body 12 and is located in a central area of the second plate body 12.

In some embodiments, the labeling area 124 includes a reversible transparent cover body. The cover body is capable of being clamped with the second plate body 12. A gap for placing label paper is formed between the cover body and a main plate body 5 of the second plate body 12.

The first plate body 11 is further provided with a clamping part for connecting with a third mechanism. The "third mechanism" mentioned here refers to other mechanisms except the cable arranging mechanism. In some embodiments, it may be a distribution frame, a cable arranging frame, a network distribution cabinet, etc.

Referring to FIG. 2, in some embodiments, the clamping part includes at least one second clamping protrusion 31 and at least one clamping fastener 32.

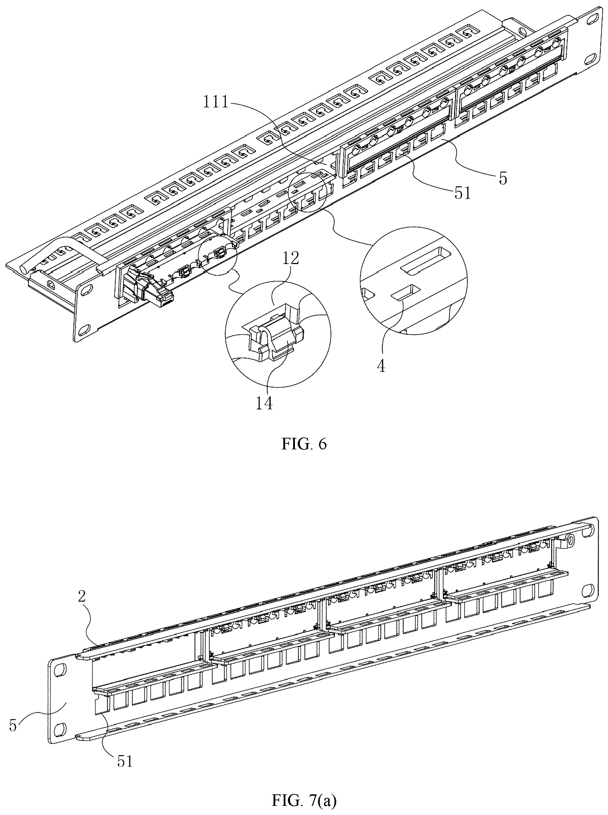

The second clamping protrusion 31 is provided close to a lower edge of the first plate body 11. The third mechanism is provided with a third clamping groove 4 fit with the second clamping protrusion 31 (refer to FIG. 6 for a schematic diagram when the first plate body and the second plate body are removed from a second opening 111 from a left end). The clamping fastener 32 is used for clamping with a partial area of the third mechanism. An outer end of the clamping fastener 32 is provided with a slope surface. The height of the slope surface gradually decreases along the side far away from the main body of the cable arranging mechanism. Therefore, when the cable arranging mechanism needs to be clamped with the third mechanism, the cable arranging mechanism will be pushed towards a direction close to the third mechanism. Under the guidance of the slope surface, the clamping fastener 32 can be quickly clamped with the third mechanism. In some embodiments, a fourth clamping groove 9 is formed between the clamping fastener 32 and the main plate body of the first plate body 11, so that it can be clamped with the third mechanism through the fourth clamping groove 9. A groove bottom of the fourth clamping groove 9 may be flat or stepped, so that it can fit with the third mechanism of more specifications and sizes.

### Embodiment 2

Referring to FIG. 7(a), this embodiment provides a connecting plate for distribution, which includes a main plate body 5 and the cable arranging mechanism according to embodiment 1. The main plate body 5 is provided with at least one network interface 51 for plugging a network cable. The height of the connecting plate is 1U-2U.

In some embodiments, the cable arranging mechanism is provided along a lower edge of the connecting plate, and the network interface 51 is provided close to an upper edge of the connecting plate. The cable arranging mechanism is located above the network interface 51, and each through hole 13 of the cable arranging mechanism is provided corresponding to the upper part of the network interface 51 one to one, so that the arranged cable body can be placed in order and is convenient to locate.

In some embodiments, the height of the connecting plate is 1U, and the height occupied by the cable arranging mechanism is not more than 0.5U. During distribution, firstly the second plate body 12 is reversed and opened from the first plate body 11, and then the cable is passed through the opening 111 (refer to FIG. 6 for a schematic diagram when the second plate body 12 at the leftmost end is reversed and opened from the first plate body 11). Then, the second plate body 12 is clamped with the first plate body 11. Then, the cable is arranged, and the clamping piece 2 is pushed to clamp it with the cable. The connecting plate for distribution provided by the present application has the functions of distributing and arranging the cable at the same time, and the overall height is still within the standard height (1U) of the existing cable arranging frame. Therefore, the occupied volume is not increased due to the provision of the cable arranging mechanism, so the space in the network mounting cabinet can be effectively saved.

In other possible embodiments, the cable arranging mechanism may also be provided along the lower edge of the connecting plate, and the network interface 51 is provided close to the upper edge of the connecting plate.

In other possible embodiments, the height of the connecting plate may also be 2U, thus forming a standard size consistent with the height of the cable arranging frame and the distribution frame combined in the existing technology, and not changing the layout in the existing distribution cabinet.

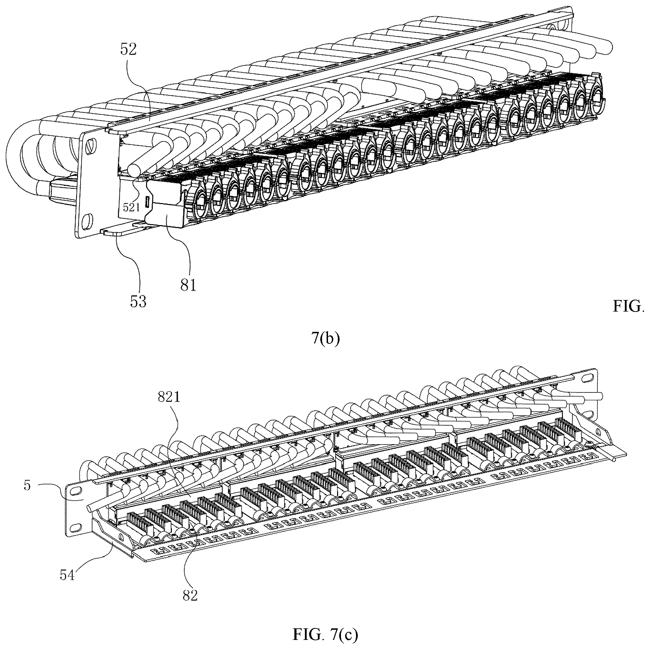

In some embodiments, referring to FIG. 7(b), the main plate body 5 is further provided with an extension plate 152 and an extension plate II 53 which are perpendicular to the main plate body and extend in a direction far away from the main plate body. A clamping position for clamping a network module 51 is formed between the extension plate I 52 and the extension plate II 53. Correspondingly, a clamping position 521 may be further provided on the extension plate I 52 and the extension plate II 53. Correspondingly, the network module 81 is provided with a structure capable of being fit with the clamping position 521, thus facilitating the connection of a network switching module in the form of the network module 81.

In other possible embodiments, referring to FIG. 7(c), a network switching module of a PCB 82 may be used for replacing the network module 81. The PCB 82 may be provided on a bracket 54 and the bracket 54 may be connected with the main plate body 5. The PCB 82 may also be directly clamped on the main plate body 5 through a connector 821. In some embodiments, the connector 821 is generally in a long strip shape, and each PCB 82 may be provided corresponding to a plurality of network interfaces 51.

### Embodiment 3

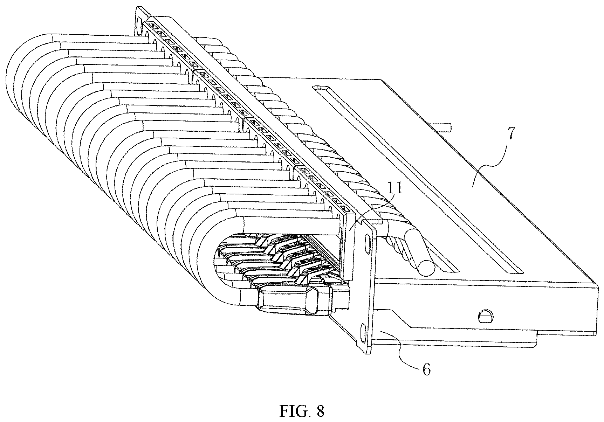

Referring to FIG. 8-10, this embodiment provides a distribution frame, which includes the connecting plate for distribution in embodiment 2, and a frame body 6 connected with the connecting plate. The frame body 6 may be integrated or split. When the frame 6 is integrated, the overall mounting convenience can be improved.

In some embodiments, a cable arranging frame 61 is further provided on the frame body 6 in the distribution frame provided by the present application, a cable clamping base 62 corresponding to each network interface 51 is provided on the cable arranging frame 61, and a tying fastener 63 is provided on the cable clamping base 62. Therefore, the cable on the cable arranging frame 61 can be arranged and fixed.

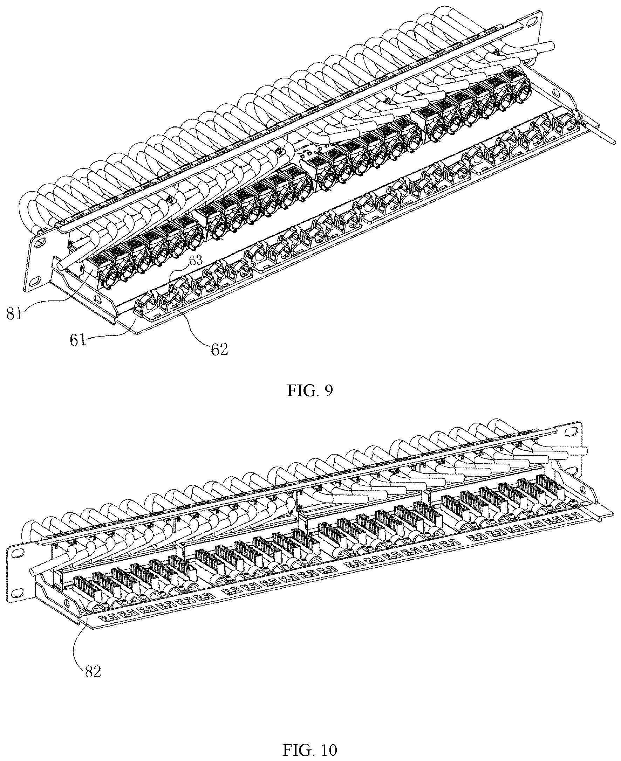

In some embodiments, it further includes a cover body 7 detachably connected with the frame body 6. When the cover body 7 is closed, the cable arranging mechanism is not provided in a box body formed by the cover body 7 and the frame body 6. Therefore, the network cabling modules are all located in the chamber, and only the cables connected with the network interface are located outside the box body, so that the overall attractiveness is high. A network module 81 as illustrated in FIG. 9 or a PCB 82 as illustrated in FIG. 10 may be provided in the box body formed by the cover body 7 and the frame body 6 to realize the connection with the cable.

The PCB 82 is provided with an electric plug core located inside the network interface 51. The PCB 82 is further provided with a terminal base. A cable clamping blade is plugged on the terminal base. A cable limiting post is provided above the terminal base. A top of the cable clipping blade extends into the inside of the cable limiting post to cut the cable in the cable limiting post so as to contact the conductor in the cable to achieve data transmission.

Therefore, on the basis of keeping the original 1U height of the distribution frame unchanged, the distribution frame provided by the present application is added with a cable arranging function, that is, there is no need to separately provide the cable arranging frame 61. Therefore, the space occupied in the network mounting cabinet is greatly saved, and the distribution frame does not need to increase its size or height to realize the functions of cable arrangement and distribution at the same time.

Taking a 48-port switch as an example, when the distribution frame is 24-port, two groups of distribution frames need to be equipped, and a cable arranging frame 61 is provided corresponding to each distribution frame. Generally, the height of the cable arranging frame 61 is also 1U, that is, the required height except for the switch is 4U. By using the distribution frame provided by the present application, when 48 cables are connected, the occupied height in the cabinet can be reduced by 2U, and the space in the cabinet can be reduced by 30%-40%.

The above embodiments are only intended to describe the technical concept and features of the present application, are intended to allow those skilled in the art to understand the content of the present application and implement the present application, and are not intended to limit the scope of protection of the present application. Any equivalent changes or modifications made according to the essence of the present application should be covered by the scope of protection of the present application.

## Claims

1. A cable arranging mechanism, wherein the cable arranging mechanism comprises:
a first plate body, the first plate body being provided with an opening for a connector of a cable to pass through; and
a second plate body, at least partial area of the second plate body being capable of being clamped with the first plate body, when the second plate body and the first plate body are clamped with each other, the opening for the connector of the cable to pass through being closed and at least one through hole for the cable to pass through being formed, and when the second plate body and the first plate body are not clamped, the opening for the connector of the cable to pass through being in an open state.

2. The cable arranging mechanism according to claim 1, wherein the cable arranging mechanism further comprises a clamping piece and the clamping piece is capable of moving towards a direction close to or far away from the cable passing through the through hole.

3. The cable arranging mechanism according to claim 2, wherein at least one of the first plate body and the second plate body is provided with an adjustment chamber for mounting the clamping piece, and the clamping piece is capable of moving in the adjustment chamber.

4. The cable arranging mechanism according to claim 3, wherein the cable arranging mechanism further comprises at least one first clamping protrusion capable of being clamped with the clamping piece, and the clamping piece is provided with at least one first clamping groove capable of being fit with the first clamping protrusion.

5. The cable arranging mechanism according to claim 4, wherein the adjustment chamber is provided in the first plate body and the first clamping protrusion is provided on the second plate body.

6. The cable arranging mechanism according to claim 3, wherein the cable arranging mechanism further comprises at least one limiting protrusion, a limiting groove I is provided in the end of the clamping piece close to the through hole, a limiting groove II is provided in the end of the clamping piece far away from the through hole, and the limiting protrusion is capable of being respectively clamped into the limiting groove I and the limiting groove II.

7. The cable arranging mechanism according to claim 6, wherein the limiting protrusion is provided on an inner sidewall of the adjustment chamber.

8. The cable arranging mechanism according to claim 1, wherein at least one first clamping head capable of being clamped with the first plate body is provided on the second plate body and the first clamping head is provided with a second clamping groove capable of being clamped with the first plate body.

9. The cable arranging mechanism according to claim 7, wherein the side of the first clamping head far away from the second plate body is provided with an adjustment groove and the first clamping head is capable of moving towards a direction close to or far away from the first plate body in the adjustment groove.

10. The cable arranging mechanism according to any one of claims 1-9, wherein the cable arranging mechanism further comprises a labeling area, the labeling area is used for marking a hole number of the through hole, and the labeling area is provided on the second plate body and is located in a central area of the second plate body.

11. The cable arranging mechanism according to claim 1, wherein the first plate body is further provided with a clamping part for connecting with a third mechanism.

12. The cable arranging mechanism according to claim 11, wherein the clamping part comprises:
at least one second clamping protrusion, the second clamping protrusion being provided close to a first edge of the first plate body, the third mechanism being provided with a third clamping groove fit with the second clamping protrusion; and
at least one clamping fastener, the clamping fastener being used for clamping with a partial area of the third mechanism.

13. A connecting plate for distribution, wherein the connecting plate for distribution comprises a main plate body and the cable arranging mechanism according to any one of claims 1-14, the main plate body is provided with at least one network interface for plugging a network cable, and the height of the connecting plate is 1U-2U.

14. The connecting plate for distribution according to claim 13, wherein the height of the connecting plate is 1U and the height occupied by the cable arranging mechanism does not exceed 0.5U.

15. A distribution frame, wherein the distribution frame comprises the connecting plate for distribution according to claim 13 or 14, a frame body connected with the connecting plate and a cover body detachably connected with the frame body, and when the cover body is closed, the cable arranging mechanism is not provided in a chamber formed by the cover body and the frame body.
